# EUROPÄISCHE PATENTSCHRIFT

(11) **EP 3 707 019 B1**
(45) Veröffentlichungstag und Bekanntmachung des Hinweises auf die Patenterteilung: **15.06.2022**
(21) Anmeldenummer: 18796890.4
(22) Anmeldetag: 30.10.2018
(51) Int. Cl.: B60H 1/32

(54) **VERFAHREN ZUM BETREIBEN EINER WÄRMEPUMPE**
METHOD FOR OPERATING A HEAT PUMP
PROCÉDÉ PERMETTANT DE FAIRE FONCTIONNER UNE POMPE À CHALEUR

(30) Priorität: 08.11.2017 DE 102017219888
(43) Veröffentlichungstag der Anmeldung: 16.09.2020
(73) Patentinhaber: Volkswagen Aktiengesellschaft, 38440 Wolfsburg (DE)
(72) Erfinder: NIERING, Stefan, 38536 Meinersen (DE); HOMANN, Gregor, 38442 Wolfsburg (DE); TWENHÖVEL, Sven, 26129 Oldenburg (DE)
(86) Internationale Anmeldenummer: PCT/EP2018/079697
(87) Internationale Veröffentlichungsnummer: WO 2019/091829

(56) Entgegenhaltungen:
- WO-A1-2005/000609
- WO-A1-2005/016672
- DE-A1- 19 939 028
- DE-B4- 19 939 028
- US-A1- 2009 241 570

## Beschreibung

Die Erfindung betrifft ein Verfahren zum Betreiben einer Wärmepumpe in einem Kraftfahrzeug, insbesondere Hybrid- oder Elektrofahrzeug, wobei die Wärmepumpe einen Kältekreis mit zumindest einem Kältemittelverdichter zum Verdichten eines Kältemittels auf einen Hochdruck p_{HD}, wobei der Hochdruck p_{HD} aus Umgebungsbedingungen und einem Fahrzeugzustand resultiert, einem Heiz-Wärmeübertrager zum Übertragen von Wärmeenergie von dem Kältemittel auf einen Luftmassenstrom für einen Fahrzeuginnenraum, um einen Sollwärmestrom bereitzustellen, einem Expansionsorgan, und einem Verdampfer, aufweist.

Mit der zunehmenden Elektrifizierung von Fahrzeugen entstehen neue Herausforderungen, die bei konventionell angetriebenen Fahrzeugen mit Verbrennungsmotor nicht existierten. Insbesondere steht bei Elektrofahrzeugen aufgrund der verglichen mit Fahrzeugen mit Verbrennungsmotor deutlich effizienteren Antriebskomponenten nur eine unzureichende Heizleistung zum Aufheizen des Fahrzeuginnenraumes zur Verfügung. Wenn sich das Elektrofahrzeug im Stillstand befindet, steht nachteilig keine nutzbare Heizleistung für den Fahrzeuginnenraum zur Verfügung.

Für Hybrid- oder Elektrofahrzeuge haben sich Wärmepumpen als Alternative zur Bereitstellung von Heizleistung bewährt. Eine derartige Wärmepumpe wird bekanntlich in den bestehenden Kältekreis einer Klimaanlage integriert. Aber auch die Wärmepumpe weist in der Bereitstellung von Heizleistung Defizite auf, insbesondere bei geringen Fahrgeschwindigkeiten und im Stillstand, wenn die Fahrgeräusche kaum oder überhaupt nicht mehr wahrnehmbar sind. Demgegenüber müsste der Kältemittelverdichter jedoch bei einer hohen Drehzahl betrieben werden, um den erforderlichen Kältemittelmassenstrom zum Aufheizen des Luftmassenstromes für den Innenraum bereitzustellen. Bei hohen Drehzahlen des Kältemittelverdichters entstehen Arbeitsgeräusche, die bei geringen Fahrgeschwindigkeiten oder insbesondere im Stillstand gegenüber Fahrgeräuschen oder Gebläsegeräuschen deutlich im Fahrzeuginnenraum zu hören sind. Diese Arbeitsgeräusche für die Fahrzeuginsassen ungewöhnlich und werden daher als störend empfunden.

Um diesen Mangel an Heizleistung auszugleichen ist es bekannt, elektrische Zuheizer wie ein Hochvolt-Luft-PTC in Klimageräte zu integrieren, um den erforderlichen Sollwärmestrom für den Innenraum bereitzustellen. Derartige Zuheizer sind jedoch teuer und bedürfen für ihre Integration einer konstruktiven Umgestaltung des Klimagerätes. Weiterhin bilden sie einen Strömungswiderstand auf dem Weg des Luftstromes hin zu dem Fahrzeuginnenraum, wodurch die Luftmenge reduziert wird. Weitere konstruktive Anpassungen von luftführenden Bauteilen können nachteiligerweise notwendig werden. Alternativ könnte die Luftmenge durch eine höhere Gebläsespannung angepasst werden, was wiederum zu einem lauteren Arbeitsgeräusch des Gebläses führt und nachteilig für den Komfort ist. Nachteilig an elektrischen Zuheizern ist ferner, dass die elektrische Energie zum Betreiben der Zuheizer die Reichweite des Elektrofahrzeuges reduziert. Bei Außentemperaturen von 0°C bis minus 20°C ist hierdurch eine drastische Reduzierung der Reichweite zu erwarten.

Darüber hinaus besteht die Möglichkeit, durch einen Teilumluftbetrieb die benötigte Heizleistung zu reduzieren. Dies ist jedoch nur sehr eingeschränkt möglich, durch Gefahr von Scheibenbeschlag aufgrund der rückgeführten Feuchtigkeit.

Weiterhin besteht die Möglichkeit die Regelung der Wärmepumpe durch Maskierungsfelder zu modifizieren und dadurch eine bessere Aufheizung zu ermöglichen. Dabei werden zunächst Eingangsgrößen wie Umgebungsbedingungen oder Messgrößen, die den Fahrzeugzustand beschreiben, ermittelt. Als Umgebungsbedingungen werden beispielsweise die Außentemperatur, die Luftfeuchtigkeit sowie der Sonneneinstrahlwinkel und die Sonneneinstrahlleistung bestimmt. Als Messgrößen des Fahrzeugzustandes werden beispielsweise Fahrgeschwindigkeit, Gebläsespannung des Gebläses im Klimagerät, Umluftklappenstellung und Radiolautstärke bestimmt. Diese Eingangsgrößen werden in ein oder mehrere Maskierungsfelder geladen. Dort kann eine Auswertung der Eingangsgrößen beispielsweise dahingehend erfolgen, dass im Stillstand des Fahrzeuges die Gebläsespannung erhöht wird, damit die dem Fahrzeugführer bekannten Arbeitsgeräusche des Gebläses die Arbeitsgeräusche des Kältemittelverdichters überwiegen. Der Kältemittelverdichter kann so bei höherer Drehzahl arbeiten und damit einen größeren Kältemittelmassenstrom für den Heiz-Wärmeübertrager bereitstellen. Folglich kann die Heizleistung erhöht werden, ohne dass dies störend für den Fahrzeuginsassen ist. Mit diesem Vorgehen kann jedoch bei geringen Fahrgeschwindigkeiten und im Stillstand, insbesondere bei zunehmend niedrigen Außentemperaturen, nicht der benötigte Sollwärmestrom bereitgestellt werden, da sich nicht alle Messgrößen durch die Maskierungsfelder ausgleichen lassen. Ein elektrischer Zuheizer wurde bislang weiterhin benötigt.

Intelligente Regelungsverfahren für die Anwendung eines Kältekreises zur Kühlung eine Fahrzeuginnenraumes sind beispielsweise aus der DE 43 36 914 A1 und DE 10 2014 016 170 A1 bekannt. Zum Betreiben einer Wärmepumpe sind die darin gezeigten Verfahren aber ungeeignet.

Die DE 199 39 028 A1 beschreibt ein Wärmepumpenkreislaufsystem, welches zwischen einem Kühlbetrieb und einem Heizbetrieb für eine (Fahrgast) Zelle umschaltbar ist und einen ersten internen Wärmetauscher und einen zweiten internen Wärmetauscher aufweist, die in einem Klimatisierungsgehäuse angeordnet sind. Der erste interne Wärmetauscher ist in dem Klimatisierungsgehäuse auf einer stromabwärtigen Seite des zweiten internen Wärmetauschers angeordnet und in Reihe geschaltet in Bezug auf die Strömungsrichtung von Kühlmittel. In dem Wärmepumpenkreislaufsystem wird ein Expansionsventil derart gesteuert, dass der Wirkungsgrad bei jedem Betrieb ungefähr maximal wird.

Vor diesem Hintergrund ist es Aufgabe der Erfindung die Nachteile aus dem Stand der Technik zu verringern.

Die Erfindung löst diese Aufgabe durch ein Verfahren gemäß Anspruch 1, das sich durch die Schritte auszeichnet: (a) Bestimmen einer potentiellen oder tatsächlichen Verringerung des Hochdruckes p_{HD} aus den Umgebungsbedingungen und dem Fahrzeugzustand, die dazu führt, dass der Sollwärmestrom nicht erreicht wird, und (b) Erhöhen des Hochdrucks p_{HD} durch einen verringerten Durchströmquerschnitt im Expansionsorgan, so dass der Sollwärmestrom erreicht wird. Erfindungsgemäß wird das Verfahren durchgeführt, wenn aus dem Fahrzeugzustand ein Fahrzeugstillstand zu erwarten ist. Hierzu wird als relevante Messgröße des Fahrzeugzustandes ein zeitlicher Verlauf einer Verzögerung der Fahrgeschwindigkeit berücksichtigt. Alternativ oder zusätzlich kann ein zeitlicher Verlauf der Betätigung eines Gaspedals und/oder Bremspedals berücksichtigt werden.

Dadurch kann vorteilhafterweise auf einen elektrischen Zuheizer verzichtet werden, was nicht nur Kosten, sondern auch den konstruktiven Aufwand einer nach dem erfindungsgemäßen Verfahren betriebenen Wärmepumpe reduziert. Weiterhin wird die Regelung vereinfacht, indem auf ein bereits vorhandenes System, nämlich den Kältekreis der Wärmepumpe zurückgegriffen wird. Der Erfindung liegt die überraschende Erkenntnis zu Grunde, dass der Kältekreis als solcher ausreicht, um auch bei kritischen Bedingungen, insbesondere bei tiefen Außentemperaturen bis zu -20°C und geringen Fahrgeschwindigkeiten bis hin zum Stillstand, den Sollwärmestrom zur Verfügung zu stellen. Dabei wurde ein ungewöhnliches Vorgehen gewählt, denn durch einen verringerten Durchströmquerschnitt und die damit verbundene Erhöhung des Hochdrucks wird die Effizienz der Wärmepumpe schlechter. Die Verringerung des COP beträgt bis zu 300 %. Durch den geringeren COP wird einerseits eine größere elektrische Leistung zum Betreiben des Kältemittelverdichters benötigt und damit nachteilig die Reichweite des Elektrofahrzeuges weiter reduziert. Es hat sich andererseits jedoch gezeigt, dass das Verfahren weniger elektrische Energie benötigt, als ein elektrischer Zuheizer und dennoch vorteilhafterweise den benötigten Sollwärmestrom bereitstellen kann. In anderen Worten ist das erfindungsgemäße Verfahren stets effizienter als die ausschließliche Nutzung eines Hochvolt-Luft-PTC, außer es liegt ein Betriebszustand vor, in dem kein Verdampfungswärmestrom zur Verfügung steht und so dem Kältemittel ausschließlich Energie über den Kältemittelverdichter zugeführt werden kann.

Im Rahmen der vorliegenden Beschreibung wird stets von einem Kältemittelverdichter, Heiz-Wärmeübertrager, Expansionsorgan und Verdampfer gesprochen. Es ist jedoch möglich und gemäß einer bevorzugten Ausführungsform vorgesehen, dass die Wärmepumpe auch jeweils mehrere dieser Komponenten aufweisen kann. Besonders bevorzugt weist die Wärmepumpe zumindest zwei Expansionsorgane und zwei Verdampfer auf.

Im Rahmen der vorliegenden Beschreibung werden zur Beschreibung der Umgebungsbedingungen und des Fahrzeugzustandes insbesondere alle Messgrößen verstanden, die von einem CAN-Bus des Fahrzeuges abgegriffen werden können.

In einer bevorzugten Ausführungsform der Erfindung ist das Expansionsorgan als ein elektrisch ansteuerbares Expansionsventil (EXV) ausgebildet, dessen Durchströmquerschnitt verringert wird. Dadurch kann der Durchströmquerschnitt beliebig eingestellt werden, um den gewünschten Hochdruck einzustellen, der für den gewünschten Sollwärmestrom benötigt wird. Die Erfindung ist jedoch nicht auf den Einsatz eines EXV beschränkt. Allgemein können veränderbare und/oder zuschaltbare verringerte Durchströmquerschnitte vorgesehen sein. Es ist beispielsweise denkbar, dass ein thermostatisches Expansionsventil (TXV) in Kombination mit wenigstens einer parallel zum TXV geschalteten Fixdrossel eingesetzt wird. Bei einer Fixdrossel handelt es sich in seiner einfachsten Ausgestaltung um ein Rohr mit einer Querschnittsverengung. Diese Querschnittsverengung stellt den verringerten Durchströmquerschnitt dar, der für die Erhöhung des Hochdrucks sorgt. Wenn bestimmt worden ist, dass der Hochdruck nicht hoch genug zum Bereitstellen des Sollwärmestromes ist, kann mittels eines Drei-Wege-Ventils, insbesondere stufenlosen Drei-Wege-Ventils, Kältemittel anteilig oder vollständig über die Fixdrossel geleitet werden, so dass der Hochdruck erhöht wird.

Bei einer vorteilhaften Ausgestaltung der Erfindung wird Schritt (a) von Anspruch 1 unter Berücksichtigung eines zur Verfügung stehenden Verdampfungswärmestromes zum Verdampfen von Kältemittel in dem zumindest einen Verdampfer durchgeführt. Der über den Heiz-Wärmeübertrager erzeugbare Wärmestrom zum Aufheizen des Fahrzeuginnenraumes ist vereinfacht die Summe aus dem Verdampfungswärmestrom und einer Verdichtungsleistung des Kältemittelverdichters. Der Verdampfungswärmestrom wurde für die Bestimmung, ob das Verfahren durchgeführt wird, als relevant identifiziert, denn der Verdampfungswärmestrom ist gegenüber der Verdichtungsleistung maßgeblich von den Umgebungsbedingungen abhängig. Der Verdampfungswärmestrom berechnet sich aus den Umgebungsbedingungen wie Außentemperatur, Luftfeuchte und/oder Luftgeschwindigkeit sowie Messgrößen des Fahrzeugzustandes wie Fahrgeschwindigkeit, Frontlüfterspannung und Verdampfungsdruck. Daraus lässt sich eine Aussage darüber treffen, ob am Heiz-Wärmeübertrager der gewünschte Sollwärmestrom zur Verfügung steht, respektive abgeführt werden kann. Selbstverständlich unterliegt der maximal zur Verfügung stehende Verdampfungswärmestrom systembedingten und umgebungsbedingten Grenzen, die beispielsweise zur Vereisung des Verdampfers führen können. Es ist diesbezüglich bekannt zum Schutz vor Vereisung die Lufttemperatur im Luftstrom nach dem Verdampfer mittels eines Temperaturfühlers zu messen und bei Erreichen einer Minimaltemperatur die Durchströmöffnung oder die Förderleistung des Kältemittelverdichters anzupassen.

Vorzugsweise wird Schritt (b) von Anspruch 1 bis zum Erreichen eines Sollhochdrucks durchgeführt, wobei sich dieser Sollhochdruck aus den Umgebungsbedingungen und/oder dem Fahrzeugzustand, insbesondere aus dem Verdampfungswärmestrom, und/oder dem zu erreichenden Sollwärmestrom, und/oder einer Abweichung einer Solltemperatur T_{Soll} zu einer Ist-Temperatur des Luftmassenstromes, und/oder Drehzahlen des Kältemittelverdichters und/oder eines Frontlüfters, und/oder einer Fahrzeuggeschwindigkeit, ergibt. Dadurch wird vorteilhafterweise das Verfahren nur in dem Maße durchgeführt, wie es zwingend benötigt wird, da es wie erläutert zur einer Verschlechterung des COP der Wärmepumpe führt. In anderen Worten wird der Durchströmquerschnitt nur so weit verringert wie unter Berücksichtigung der aufgezählten Größen wirklich notwendig ist, um den Sollwärmestrom bereitzustellen. Durch Drehzahlen bedingte Arbeitsgeräusche, die beim Bereitstellen des Sollwärmestromes entstehen würden und die ohne das Verfahren störend für die Fahrzeuginsassen sein würden, können darüber hinaus bestmöglich reduziert werden.

Gemäß einer bevorzugten Ausführungsform wird Schritt (b) von Anspruch 1 unter Berücksichtigung eines Kennfeldes des Kältemittelverdichters durchgeführt wird. Dadurch wird der Durchströmquerschnitt nur in dem Maße verringert, wie es zwingend notwendig ist, so dass die Effizienz der Wärmepumpe maximiert wird. Das Kennfeld des Kältemittelverdichters umfasst eine notwendige Veränderung des Durchströmquerschnitts in Abhängigkeit eines Saugdrucks, der Drehzahl des Kältemittelverdichters sowie einer Druckdifferenz zwischen Hochdruck und Saugdruck. Der Betriebspunkt des Kältemittelverdichters kann anhand des Kennfeldes ermittelt werden, ob und in welchem Maße ein Bereitstellen des Sollwärmestromes noch mittels des Kältemittelverdichters möglich ist. Beispielsweise könnte der Kältemittelverdichter einen höheren Kältemittelmassenstrom fördern. Dies führt dazu, dass ein geringerer Hochdruck/eine geringere Temperatur des Kältemittels benötigt wird, um den erforderlichen Sollwärmestrom bereitzustellen. Dies könnte durch Anhebung des Fördervolumens pro Arbeitstakt oder durch eine höhere Drehzahl erreicht werden. Dabei ist eine Limitierung der Arbeitsgeräusche des Kältemittelverdichters zu berücksichtigen. Es ist in diesem Zuge zu überprüfen, in welchem Maße ein größerer Kältemittelmassenstrom noch effizienter bereitgestellt werden kann, als dass es durch das Erhöhen des Hochdrucks gemäß Schritt (b) möglich ist. Anhand des Kennfeldes wird vorteilhafterweise ein möglichst effizienter Betrieb der Wärmepumpe durch eine minimale Anwendung des Verfahrens im Sinne der Erfindung gewährleistet.

Bevorzugt wird der Durchströmquerschnitt zeitlich verzögert zu einem Zeitpunkt wieder vergrößert, an dem durch die Umgebungsbedingungen und/oder den Fahrzeugzustand bedingt ein größerer Durchströmquerschnitt zum Erreichen des Sollwärmestromes bereits ausreichend ist. Das Vergrößern erfolgt dabei auf einen Durchströmquerschnitt, der zwischen dem Durchströmquerschnitt liegt, der ohne Anwendung des Verfahrens vorliegen würde, und dem verringerten Durchströmquerschnitt. Dadurch wird vorteilhafterweise sichergestellt, dass der Durchströmquerschnitt nicht zu einem Zeitpunkt vergrößert wird, an dem insbesondere aus dem aktuellen Fahrzeugzustand vergleichsweise unsicher auf dessen weiteren zeitlichen Verlauf geschlossen werden kann. Vorzugsweise wird als relevante Messgröße für den Fahrzeugzustand die Fahrgeschwindigkeit über einen Zeitraum von wenigstens einer Sekunde, vorzugsweise zwei Sekunden, besonders bevorzugt drei Sekunden berücksichtigt. Wenn sich die Fahrzeuggeschwindigkeit über diesen Zeitraum in definierter Höhe erhöht, so ist davon auszugehen, dass das Fahrzeug längerfristig beschleunigt und beispielsweise kein Stop and Go Betrieb vorliegt.

Das Verfahren ist im Sinne der Erfindung grundsätzlich nicht auf den Betrieb von Wärmepumpen mit bestimmten Kältemitteln beschränkt. So ist das Verfahren ebenso mit dem etablierten R134a, als auch mit R744 oder R1234yf oder einem anderen Kältemittel durchführbar.

Ausführungsbeispiele der Erfindung sollen anhand der nachfolgenden Figuren näher erläutert werden. Es zeigen:
- Figur 1 -: ein Diagramm mit schematisch dargestellten Kurven von Messgrößen des Fahrzeugzustandes zu verschiedenen Fahrzuständen ohne Anwendung des erfindungsgemäßen Verfahrens;
- Figur 2 -: ein Diagramm mit schematisch dargestellten Kurven von Messgrößen des Fahrzeugzustandes zu verschiedenen Fahrzuständen unter Anwendung des erfindungsgemäßen Verfahrens; und
- Figur 3 -: ein schematisches Ablaufdiagramm über beispielhafte Bedingungen zur Durchführung des erfindungsgemäßen Verfahrens.

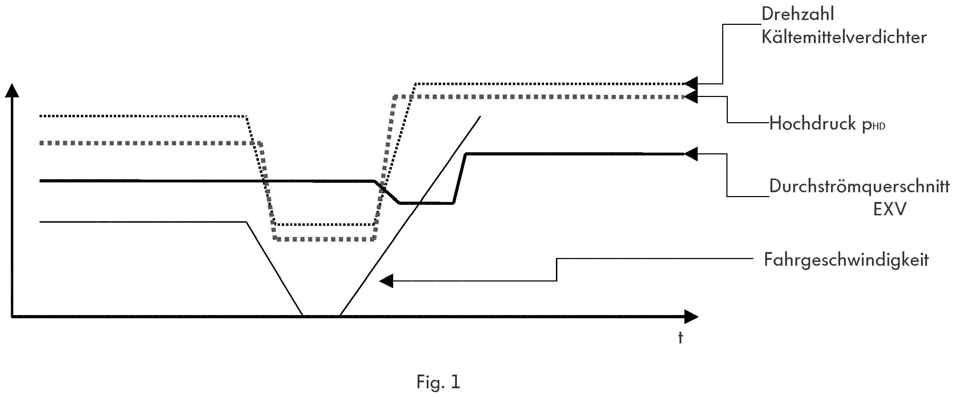

In Figur 1 ist ein Diagramm mit schematisch dargestellten Kurven von Messgrößen des Fahrzeugzustandes dargestellt. Als Messgrößen sind dargestellt, eine Drehzahl des Kältemittelverdichters, ein Hochdruck p_{HD}, ein Durchströmquerschnitt eines EXV und eines Fahrgeschwindigkeit eines Fahrzeuges. Es ist der prinzipielle Verlauf dargestellt, wobei der Wert der jeweiligen Messgröße nicht angegeben ist. Die y-Achse ist daher dimensionslos. Auf der X-Achse ist der Zeitverlauf entlang einer Zeit t dargestellt. Es ist anhand der Kurve der Fahrgeschwindigkeit zu erkennen, dass verschiedene Fahrzustände abgebildet sind. Zunächst erfolgt eine Fahrt bei konstanter Geschwindigkeit, dann ein Abbremsvorgang bis zum Stillstand, eine Standphase sowie ein abschließender Beschleunigungsvorgang.

Es ist zu erkennen, dass während der Fahrt bei konstanter Geschwindigkeit und beim Beschleunigungsvorhang der Hochdruck p_{HD} im Vergleich zum Abbremsvorgang und Stillstand deutlich höher ist. Bei diesem Hochdruck p_{HD} kann ein ausreichender Sollwärmestrom erzeugt werden, da der Kältemittelverdichter aufgrund der im Vergleich zum Stillstand höheren Drehzahlen einen ausreichend hohen Kältemittelmassenstrom erzeugen kann und dadurch ein höherer Hochdruck p_{HD} und damit einhergehend eine höhere Kältemitteltemperatur vorliegt. Ein elektrisch angetriebener Kältemittelverdichter kann ebenso verwendet werden und der entsprechende Hochdruck durch ein variables Hubvolumen und die Drehzahl eingestellt werden. Während des Abbremsvorganges und im Stillstand werden die Fahrgeräusche des Fahrzeuges immer weniger hörbar, so dass die Drehzahl des Kompressors, insbesondere bei elektrisch angesteuerten Kältemittelverdichtern, heruntergeregelt werden muss, um dessen Arbeitsgeräusche zu reduzieren. Dies führt dazu, dass der Sollwärmestrom nicht bereitgestellt werden kann und dieses Defizit nach dem Stand der Technik nur durch einen Zuheizer kompensiert werden kann. Der Durchströmquerschnitt des EXV bleibt während der für die Bereitstellung des Sollwärmestromes kritischen Phasen unverändert, um einen möglichst effizienten Betrieb der Wärmepumpe zu realisieren und um dadurch einen möglichst geringen Reichweitenverlust für das Fahrzeug bei elektrischer Fahrt zu erhalten.

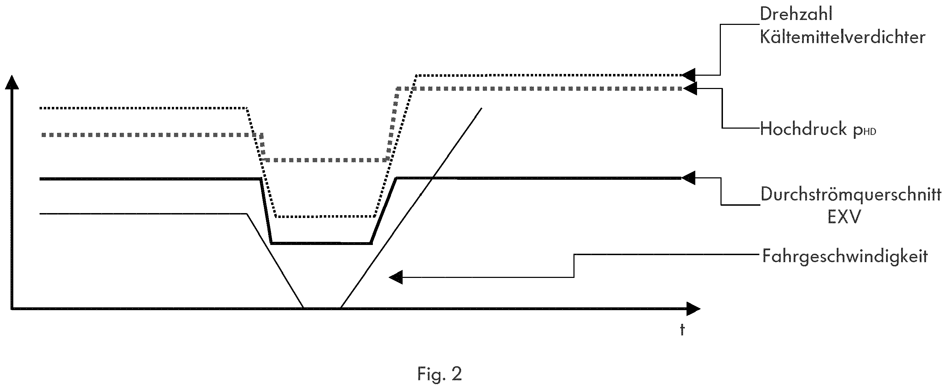

In Figur 2 sind dieselben Fahrzustände und Messgrößen wie in Figur 1 allerdings unter Anwendung des erfindungsgemäßen Verfahrens dargestellt. Kurz nachdem die Fahrgeschwindigkeit reduziert wird, erkennt die Regelung der Wärmepumpe, dass ein Fahrzustand mit einer damit einhergehenden Verringerung des Hochdrucks vorliegt. Die Regelung erkennt weiterhin, dass diese Verringerung des Hochdrucks dazu führt, dass der Sollwärmestrom nicht mehr dadurch erzeugt werden kann, dass beispielsweise die Drehzahl des Kältemittelverdichters angehoben wird. Dazu ist die Fahrgeschwindigkeit zu gering und die Arbeitsgeräusche des Kältemittelverdichters würden von den Fahrzeuginsassen als störend empfunden werden. In der Folge wird im Sinne der Erfindung ein verringerter Durchströmquerschnitt bereitgestellt, indem das EXV zugefahren wird. Dies bewirkt, dass die Verringerung des Hochdrucks p_{HD} gestoppt wird. Im Vergleich zu dem Verlauf des Hochdrucks p_{HD} in Figur 1, ist in Figur 2 ein deutlich höher angeordnetes Plateau während der Standphase zu erkennen. Mit dem höheren Hochdruck p_{HD} weist das Kältemittel eine höhere Temperatur und damit Wärmeenergie auf, die auf den Luftstrom für den Fahrzeuginnenraum über den Heiz-Wärmetauscher übertragen werden kann. Durch das Verringern des Durchströmquerschnitts steht dem Kältemittelverdichter ein vergleichsweise geringer Kältemittelmassenstrom zur Verfügung, was dazu führt, dass auch ein geringerer Kältemittelmassenstrom durch den Heiz-Wärmetauscher strömt. Durch das erhöhte Druck-und Temperaturniveau ist der geringere Kältemittelmassenstrom jedoch ausreichend, um den Sollwärmestrom bereitzustellen.

Sobald die Umgebungsbedingungen und/oder der Fahrzeugzustand sich derart ändert, dass der aktuelle Durchströmquerschnitt des EXV nicht mehr benötigt wird und der Sollwärmestrom effizienter bereitgestellt werden kann, wird der Durchströmquerschnitt zeitlich verzögert verringert. Dies ist in Figur 2 daran zu erkennen, dass nach einer gewissen Zeit nach Beginn der Beschleunigung der Durchströmquerschnitt wieder vergrößert wird.

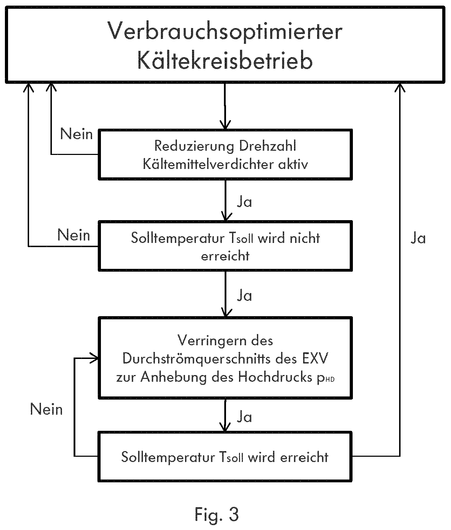

In Figur 3 ist ein schematisches Ablaufdiagramm über beispielhafte Bedingungen dargestellt, die vorliegen müssen, damit das erfindungsgemäße Verfahren durchgeführt wird. Grundsätzlich wird ein verbrauchsoptimierter Kältekreisbetrieb der Wärmepumpe angestrebt, um eine möglichst große Reichweite insbesondere von Elektrofahrzeugen bereitzustellen. Dabei wird beispielsweise das eingangs erwähnte Vorgehen unter Zuhilfenahme von Maskierungsfeldern eingesetzt. In den Figuren 1 und 2 wurde ein Szenario gezeigt, nämlich das Abbremsen in den Stillstand, das eine Reduzierung der Drehzahl des Kältemittelverdichters erfordert, um die Arbeitsgeräusche des Kältemittelverdichters zu reduzieren. Dies stellt eine Bedingung dar, die dazu führen kann, dass das Verfahren im Sinne der Erfindung angewendet wird. Diese Bedingung ist im zweiten Block von oben aufgeführt.

Die Reduzierung der Drehzahl kann dazu führen, dass eine Solltemperatur T_{Soll} im Fahrzeuginnenraum nicht mehr erreicht wird. Die Solltemperatur T_{Soll} korreliert zum benötigten Sollwärmestrom, denn sie wird nur erreicht, wenn ein ausreichender Sollwärmestrom zur Verfügung steht. Wenn die Bedingung "Reduzierung Drehzahl Kältemittelverdichter aktiv" nicht mehr erfüllt ist, kann die Aufheizung nach dem Block "Verbrauchsoptimierter Kältekreisbetrieb" fortgesetzt werden. Wenn diese Bedingung erfüllt ist und die Solltemperatur T_{Soll} nicht erreicht werden kann, wird der Durchströmquerschnitt des EXV verringert, um die beschriebenen Effekte zu erhalten. Es findet ständig eine Abfrage der Solltemperatur T_{Soll} statt, so dass der Durchströmquerschnitt dementsprechend gehalten, vergrößert oder verringert wird. Wenn die Solltemperatur T_{Soll} daraufhin erreicht werden kann, erfolgt wieder ein verbrauchsoptimierter Kältekreisbetrieb. Dies ist an dem mit "Ja" bezeichneten Pfeil zwischen dem unteren und oberen Block zu erkennen.

Als alternative oder zusätzliche Bedingung kann eine drohende oder bereits vorliegende Verdampfervereisung definiert werden. Eine Verdampfervereisung ist durch Absenkung des Verdampfungswärmestromes zu vermeiden oder wieder aufzuheben, dann jedoch steht weniger Energie für die Bereitstellung des Sollwärmestromes zur Verfügung. Es liegt folglich ein Defizit vor, dass über das Verfahren gemäß der Erfindung ausgeglichen werden kann.

### Bezugszeichenliste

- EXV: elektrisch angesteuertes Expansionsventil
- p_{HD}: Hochdruck nach Kältemittelverdichter
- T_{Soll}: Solltemperatur im Fahrzeuginnenraum

## Patentansprüche

1. Verfahren zum Betreiben einer Wärmepumpe in einem Kraftfahrzeug, insbesondere Hybrid- oder Elektrofahrzeug, wobei die Wärmepumpe einen Kältekreis mit zumindest
- einem Kältemittelverdichter zum Verdichten eines Kältemittels auf einen Hochdruck p_{HD}, wobei der Hochdruck p_{HD} aus Umgebungsbedingungen und einem Fahrzeugzustand resultiert,
- einem Heiz-Wärmeübertrager zum Übertragen von Wärmeenergie von dem Kältemittel auf einen Luftmassenstrom für einen Fahrzeuginnenraum, um einen Sollwärmestrom bereitzustellen,
- einem Expansionsorgan, und
- einem Verdampfer, aufweist,
wobei die folgenden Schritte durchgeführt werden:
(a) Bestimmen einer potentiellen oder tatsächlichen Verringerung des Hochdruckes p_{HD} aus den Umgebungsbedingungen und dem Fahrzeugzustand, die dazu führt, dass der Sollwärmestrom nicht erreicht wird, und
(b) Erhöhen des Hochdrucks p_{HD} durch einen verringerten Durchströmquerschnitt im Expansionsorgan, so dass der Sollwärmestrom erreicht wird
**dadurch gekennzeichnet, dass** das Verfahren durchgeführt wird, wenn aus dem Fahrzeugzustand ein Fahrzeugstillstand zu erwarten ist, wobei als relevante Messgröße des Fahrzeugzustandes ein zeitlicher Verlauf einer Verzögerung der Fahrgeschwindigkeit berücksichtigt und/oder ein zeitlicher Verlauf der Betätigung eines Gaspedals und/oder Bremspedals berücksichtigt wird.

2. Verfahren nach Anspruch 1, **dadurch gekennzeichnet, dass** als Expansionsorgan ein elektrisch ansteuerbares Expansionsventil (EXV) verwendet wird, dessen Durchströmquerschnitt verringert wird.

3. Verfahren nach Anspruch 1 oder 2, **dadurch gekennzeichnet, dass** Schritt (a) von Anspruch 1 unter Berücksichtigung eines zur Verfügung stehenden Verdampfungswärmestromes zum Verdampfen von Kältemittel in dem zumindest einen Verdampfer durchgeführt wird.

4. Verfahren nach einem der voranstehenden Ansprüche, **dadurch gekennzeichnet, dass** Schritt (b) von Anspruch 1 bis zum Erreichen eines Sollhochdrucks durchgeführt wird und sich dieser Sollhochdruck aus den Umgebungsbedingungen und/oder dem Fahrzeugzustand, insbesondere aus
- dem Verdampfungswärmestrom, und/oder
- dem zu erreichenden Sollwärmestrom, und/oder
- einer Abweichung einer Solltemperatur T_{Soll} zu einer Ist-Temperatur des Luftmassenstromes, und/oder
- Drehzahlen des Kältemittelverdichters und/oder eines Frontlüfters, und/oder
- einer Fahrzeuggeschwindigkeit, ergibt.

5. Verfahren nach einem der voranstehenden Ansprüche, **dadurch gekennzeichnet, dass** Schritt (b) von Anspruch 1 unter Berücksichtigung eines Kennfeldes des Kältemittelverdichters durchgeführt wird.

6. Verfahren nach einem der voranstehenden Ansprüche, **dadurch gekennzeichnet, dass** der Durchströmquerschnitt zeitlich verzögert zu einem Zeitpunkt wieder vergrößert wird, an dem durch die Umgebungsbedingungen und/oder den Fahrzeugzustand bedingt ein größerer Durchströmquerschnitt zum Erreichen des Sollwärmestromes bereits ausreichend ist.

## Claims

1. Method for operating a heat pump in a motor vehicle, in particular hybrid or electric vehicle, wherein the heat pump has a refrigeration circuit with at least
- a refrigerant compressor for compressing a refrigerant to a high pressure p_{HD}, wherein the high pressure p_{HD} results from ambient conditions and a vehicle state,
- a heating heat exchanger for transferring heat energy from the refrigerant to an air mass flow for a vehicle interior compartment in order to provide a setpoint heat flow,
- an expansion element, and
- an evaporator,
wherein the following steps are carried out:
(a) determining, from the ambient conditions and the vehicle state, a potential or actual reduction of the high pressure p_{HD} which leads to the setpoint heat flow not being achieved, and
(b) increasing the high pressure p_{HD} by way of a reduced flow cross section and the expansion element, such that the setpoint heat flow is achieved,
**characterized in that** the method is carried out if a vehicle standstill is to be expected from the vehicle state, wherein, as a relevant measurement variable of the vehicle state, a profile with respect to time of a deceleration of the vehicle speed is taken into consideration, and/or a profile with respect to time of the actuation of an accelerator pedal and/or brake pedal is taken into consideration.

2. Method according to Claim 1, **characterized in that**, as an expansion element, an electrically controllable expansion valve (EXV) is used, the throughflow cross section of which is reduced.

3. Method according to Claim 1 or 2, **characterized in that** step (a) of Claim 1 is carried out taking into consideration an available evaporation heat flow for evaporating refrigerant in the at least one evaporator.

4. Method according to any one of the preceding claims, **characterized in that** step (b) of Claim 1 is carried out until a setpoint high pressure is reached, and said setpoint high pressure arises from the ambient conditions and/or the vehicle state, in particular from
- the evaporation heat flow, and/or
- the setpoint heat flow to be achieved, and/or
- a deviation of a setpoint temperature T_{Soll} from an actual temperature of the air mass flow, and/or
- rotational speeds of the refrigerant compressor and/or of a front-end fan, and/or
- a vehicle speed.

5. Method according to any one of the preceding claims, **characterized in that** step (b) of Claim 1 is carried out taking into consideration a characteristic map of the refrigerant compressor.

6. Method according to any one of the preceding claims, **characterized in that** the throughflow cross section is increased again after a time delay, at a point in time at which, owing to the ambient conditions and/or vehicle state, a larger throughflow cross section is sufficient for achieving the setpoint heat flow.

## Revendications

1. Procédé de fonctionnement d'une pompe à chaleur dans un véhicule automobile, notamment un véhicule hybride ou électrique, la pompe à chaleur comportant un circuit de refroidissement pourvu d'au moins
- un compresseur de réfrigérant destiné à comprimer un réfrigérant à une pression élevée p_{HD}, la pression élevée p_{HD} résultant de conditions d'environnement et de l'état du véhicule,
- un échangeur de chaleur de chauffage destiné à transférer de l'énergie thermique du réfrigérant à un flux massique d'air destiné à un espace intérieur de véhicule afin de fournir un flux thermique cible,
- un élément de détente et
- un évaporateur,
les étapes suivantes étant réalisées :
(a) déterminer une réduction potentielle ou réelle de la pression élevée p_{HD} à partir des conditions d'environnement et de l'état du véhicule, ce qui aura pour résultat que le flux thermique cible ne sera pas atteint, et
(b) augmenter la pression élevée p_{HD} à travers une section transversale d'écoulement réduite dans l'élément de détente de façon à atteindre le flux thermique cible,
**caractérisé en ce que** le procédé est mis en œuvre lorsqu'un arrêt du véhicule est attendu à partir de l'état du véhicule, un profil temporel d'une décélération de la vitesse de roulement étant pris en compte comme grandeur de mesure pertinente de l'état du véhicule et/ou un profil temporel de l'actionnement d'une pédale d'accélérateur et/ou d'une pédale de frein étant pris en compte.

2. Procédé selon la revendication 1, **caractérisé en ce qu'**une vanne de détente à commande électrique (EXV), dont la section transversale d'écoulement est réduite, est utilisée comme élément de détente.

3. Procédé selon la revendication 1 ou 2, **caractérisé en ce que** l'étape (a) de la revendication 1 est réalisée avec prise en compte d'un flux thermique d'évaporation disponible pour évaporer le réfrigérant dans l'au moins un évaporateur.

4. Procédé selon l'une des revendications précédentes, **caractérisé en ce que** l'étape (b) de la revendication 1 est réalisée jusqu'à ce qu'une pression élevée cible soit atteinte et cette pression élevée cible est obtenue à partir des conditions d'environnement et/ou de l'état du véhicule, en particulier
- du flux thermique d'évaporation, et/ou
- du flux thermique cible à atteindre, et/ou
- d'un écart d'une température cible Tₛₒₗₗ par rapport à une température réelle du débit massique d'air, et/ou
- de vitesses de rotation du compresseur de réfrigérant et/ou d'un ventilateur avant, et/ou
- d'une vitesse de véhicule.

5. Procédé selon l'une des revendications précédentes, **caractérisé en ce que** l'étape (b) de la revendication 1 est réalisée avec prise en compte d'un diagramme caractéristique du compresseur de réfrigérant.

6. Procédé selon l'une des revendications précédentes, **caractérisé en ce que** la section transversale d'écoulement est à nouveau augmentée avec retard à un instant où une section transversale d'écoulement plus grande est déjà suffisante pour atteindre le flux thermique cible en raison des conditions d'environnement et/ou de l'état du véhicule.
